# EUROPÄISCHE PATENTANMELDUNG

(11) **EP 1 790 960 A1**
(43) Veröffentlichungstag der Anmeldung: **30.05.2007**
(21) Anmeldenummer: 05405667.6
(22) Anmeldetag: 24.11.2005
(51) Int. Cl.: G01F 11/18

(54) **Verpackungseinheit mit integrieterm Dosiersystem**

(71) Anmelder: Alcan Technology & Management Ltd., 8212 Neuhausen am Rheinfall (CH)
(72) Erfinder: Bossel, Daniel, 8200 Schaffhausen (CH); Kancsar, Peter, 8057 Zürich (CH)

(57) **Zusammenfassung**

Bei einer Verpackungseinheit mit einem Behälter (12) zur Lagerung von Füllgut und einem Dosiersystem (30) zur Entnahme von Füllgut aus dem Behälter (12) weist das Dosiersystem (30) eine mit einem Behälterboden (26) mit Dosieröffnung (28) verbundene Aufnahme (32) und einen in der Aufnahme (32) in einer Einschubrichtung (x) verschiebbar gelagerten Dosiereinschub (34) auf. Der Dosiereinschub (34) weist einen Füllraum (60) zur Zwischenspeicherung von dem Behälter (12) portionenweise zu entnehmendem Füllgut und eine in Einschubrichtung (x) an den Füllraum (60) angrenzende Verschlussplatte (56) auf, wobei in einer ersten, geschlossenen Position des Dosiersystems (30) der Füllraum (60) unter der Dosieröffnung (28) angeordnet ist, und in einer zweiten, offenen Position des Dosiersystems (30) die Dosieröffnung (28) von der Verschlussplatte (56) abgedeckt und der Füllraum (60) ausserhalb der Aufnahme (32) frei zugänglich ist.

## Beschreibung

Die Erfindung betrifft eine Verpackungseinheit mit einem Behälter zur Lagerung von Füllgut und einem Dosiersystem zur Entnahme von Füllgut aus dem Behälter.

Zur Lagerung von rieselfähigen oder körnigen Nahrungsmitteln wie z. B. Reis oder Mais sowie Trockenfutter für Tiere sind Schachtelverpackungen aus Karton bekannt. Körnige oder pulvrige Waschmittel zur Verwendung im Haushalt sind meistens in Kartonschachteln oder in Kunststoffbeutel verpackt. Die Packungen enthalten oft ein Dosiergerät in der Form eines Messbechers oder eines Messlöffels. Auch Grosspackungen mit Trockenfutter für Hunde und Katzen liegt oft ein Dosierbecher bei.

Ein wesentlicher Nachteil der bekannten, im Haushalt verwendeten Packungen mit rieselfähigen oder stückigen Füllgütern mit beigefügtem Messbecher liegt darin, dass die Packung praktisch vollständig geöffnet werden muss, damit das Füllgut mit dem Messbecher oder Dosierlöffel der Packung portionenweise entnommen werden kann.

Der Erfindung liegt die Aufgabe zugrunde, eine Verpackungseinheit der eingangs genannten Art zu schaffen, bei welcher das Dosiersystem so in die Einheit integriert ist, dass eine portionenweise oder kontinuierliche Entnahme von Füllgut ohne grossflächiges Öffnen der Verpackung möglich ist. Zudem soll die Verpackungseinheit einfach und kostengünstig herstellbar sein.

Zur erfindungsgemässen Lösung der Aufgabe führt, dass das Dosiersystem eine mit einem Behälterboden mit Dosieröffnung verbundene Aufnahme und einen in der Aufnahme in einer Einschubrichtung verschiebbar gelagerten Dosiereinschub aufweist, wobei der Dosiereinschub einen Füllraum zur Zwischenspeicherung von dem Behälter zu entnehmendem Füllgut aufweist, wobei in einer ersten, geschlossenen Position des Dosiersystems der Füllraum unter der Dosieröffnung angeordnet ist und in einer zweiten, offenen Position des Dosiersystems der Füllraum ausserhalb der Aufnahme frei zugänglich ist.

Bei einer ersten Verpackungseinheit zur portionenweisen Entnahme von Füllgut weist der Dosiereinschub eine in Einschubrichtung an den Füllraum angrenzende Verschlussplatte auf und die Dosieröffnung ist in der zweiten, offenen Position des Dosiersystems von der Verschlussplatte abgedeckt. Der Füllraum kann eine Auslauföffnung aufweisen.

Bei einer zweiten Verpackungseinheit zur kontinuierlichen Entnahme von Füllgut weist der Füllraum eine in einem spitzen Winkel zur Einschubrichtung geneigte Platte zum automatischen Nachfliessen von Füllgut in der zweiten, offenen Position des Dosiersystems bei Entnahme von Füllgut aus dem Füllraum auf.

Bei einer einfachen und zweckmässigen Ausgestaltung der erfindungsgemässen Verpackungseinheit ist die Aufnahme rohrförmig mit einem rechteckförmigen Querschnitt ausgebildet.

Der Behälterboden kann ein Teil der Aufnahme sein.

Der Behälter ist zweckmässigerweise eine Beutelverpackung oder eine Schachtelverpackung. Bevorzugt ist der Behälter mit dem Behälterboden verklebt.

Als Materialien für die Beutelverpackung eignen sich alle üblicherweise zur Herstellung von Verpackungen dieser Art verwendeten, ein- oder mehrschichtigen Folien aus Kunststoff, gegebenenfalls im Verbund mit weiteren Schichten oder Folien aus Metall oder Papier.

Als Materialien für die Schachtelverpackung eignen sich alle üblicherweise zur Herstellung von Verpackungen dieser Art verwendeten, ein- oder mehrschichtigen Werkstoffe aus gegebenenfalls beschichtetem Karton, Papier oder Kunststoff, gegebenenfalls im Verbund mit weiteren Schichten oder Folien aus Metall oder Papier.

Als Materialien für das Dosiersystem werden je nach Verwendungszweck ein- oder mehrschichtigen Werkstoffe aus Karton, Papier oder Kunststoff, gegebenenfalls im Verbund mit weiteren Schichten oder Folien aus Metall oder Papier, eingesetzt.

Ein erstes bevorzugtes Anwendungsgebiet der Verpackungseinheit ist die Lagerung von pulverförmigen, körnigen oder stückigen Füllmitteln, wobei Füllraum gleichzeitig als Servierschale dienen kann.

Ein weiteres bevorzugtes Anwendungsgebiet der Verpackungseinheit ist die Lagerung von Trockenfutter für Tiere, wobei der Füllraum gleichzeitig als Futternapf dienen kann.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Schrägsicht auf eine Verpackungseinheit mit integriertem Dosiersystem;
- Fig. 2 einer Schrägsicht auf ein erstes Teil des Dosiersystems der Verpackungseinheit von Fig. 1;
- Fig. 3 eine Schrägsicht auf ein zweites Teil des Dosiersystems der Verpackungseinheit von Fig. 1;
- Fig. 4 eine Schrägsicht auf das aus den Teilen von Fig. 2 und 3 zusammengesetzte Dosiersystem in Offenstellung;
- Fig. 5 eine Schrägsicht auf eine andere Ausführungsform des Dosiersystems von Fig. 4 in Offenstellung;
- Fig. 6 eine Schrägsicht auf eine Beutelverpackung mit integriertem Dosiersystem;
- Fig. 7 eine Schrägsicht auf eine Schachtelverpackung mit integriertem Dosiersystem;
- Fig. 8 eine Schrägsicht auf eine Beutelverpackung für teilfeste / teilflüssige Füllgüter mit integriertem Dosiersystem;
- Fig. 9 eine Schrägsicht auf ein andere Ausführungsform eines zweites Teils des Dosiersystems der Verpackungseinheit von Fig. 1;
- Fig. 10 eine Schrägsicht auf das aus den Teilen von Fig. 2 und 9 zusammengesetzte Dosiersystem in Offenstellung.

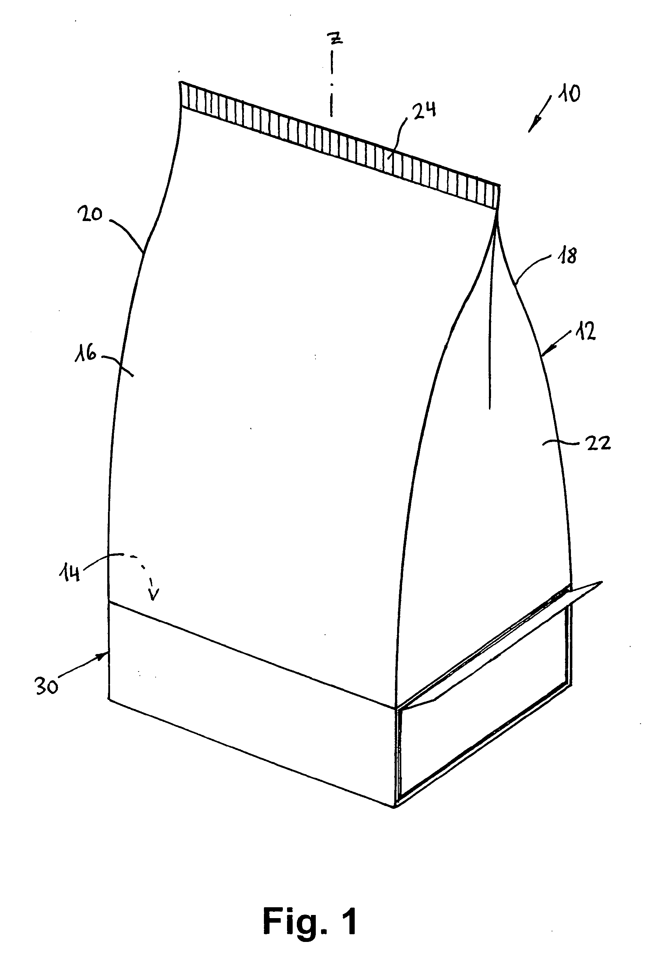

Eine in Figur 1 dargestellte Verpackungseinheit 10 mit integriertem Dosiersystem 30 weist einen beispielsweise aus einer Kunststofffolie gefertigten Beutel 12 mit einem Boden 14 und von diesem aufragenden Beutelwänden 16, 18, 20, 22 auf. An ihrem dem Boden 14 fernen Ende ist der Beutel 12 über eine quer zu einer Beutellängsachse z verlaufende Siegelnaht 24 verschlossen.

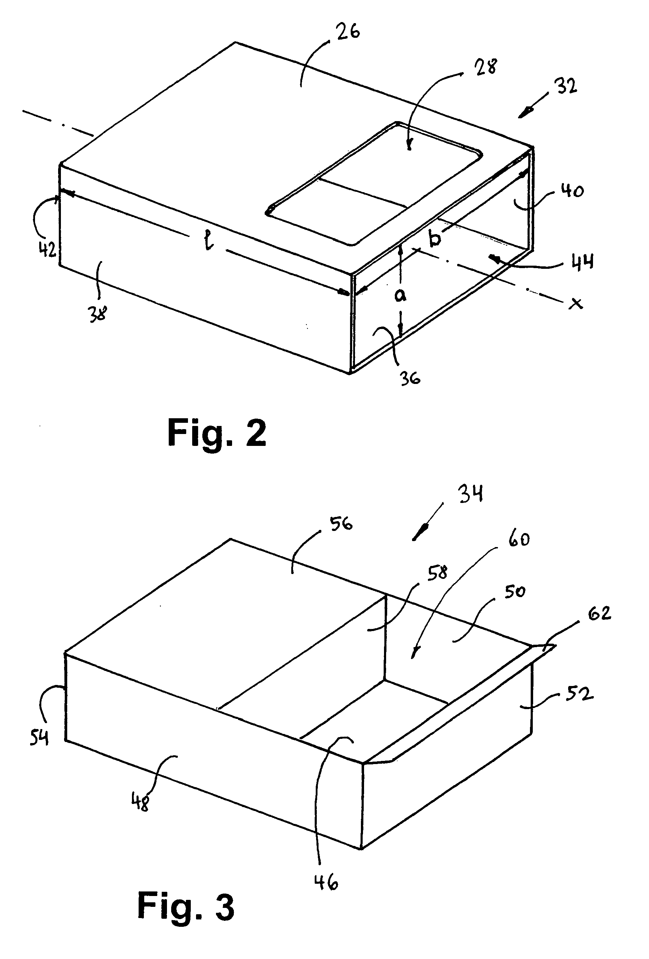

Der Boden 14 des Beutels 12 wird von einer steifen ebenen Bodenplatte 26 mit einer Dosieröffnung 28 gebildet. Wie in Fig. 2 gezeigt, ist die Bodenplatte 26 die Deckplatte einer rohrförmigen Aufnahme 32 mit rechteckigem Querschnitt und einer parallel zur Bodenplatte 26 liegenden Einschubachse x für einen in Figur 3 gezeigten Dosiereinschub 34 des Dosiersystems 30. Die Aufnahme 32 umschliesst einen im wesentlichen quaderförmigen Hohlraum mit einer der Bodenplatte 26 in einem Abstand a parallel gegenüberliegenden und gleichzeitig als Standfläche für die Verpackungseinheit 10 dienenden Fussplatte 36, zwei einander in einem Abstand b gegenüberstehenden, die Bodenplatte 26 und die Fussplatte 36 zur rohrförmigen Aufnahme 32 einer Länge I mit rechteckigem Querschnitt verbindende Längsseitenwänden 38, 40 und einer hinteren, die Aufnahme begrenzenden Querwand 42. Parallel und in einem der Länge I der Aufnahme 30 entsprechenden Abstand zur hinteren Querwand 42 bildet die Aufnahme 32 eine Einschuböffnung 44 mit rechteckigem Querschnitt. Die Dosieröffnung 28 in der Bodenplatte 26 liegt in der der Einschuböffnung 44 nahen Hälfte der Bodenplatte 26.

Der Dosiereinschub 34 hat die Form und die Funktion einer in die Aufnahme 32 einsetzbaren und in dieser in Einschubrichtung x verschiebbar gelagerten Schublade mit einer Bodenplatte 46, Längsseitenwänden 48, 50, Querwänden 52, 54 und einer Deckplatte 56, welche den Dosiereinschub 34 von der hinteren Querwand 54 her etwa zur Hälfte abdeckt. Der Aussenquerschnitt des Dosiereinschubs 34 entspricht dem Querschnitt der Einschuböffnung 44 der Aufnahme 32 unter Berücksichtigung eines zur gleitenden Verschiebung des Dosiereinschubs 34 in der Aufnahme 32 erforderlichen Spiels. Eine Zwischenwand 58 im Dosiereinschub 34 schliesst die Deckplatte 56 nach vorne ab, so dass das maximale Füllvolumen des Dosiereinschubs 34 auf den Füllraum 60 zwischen der vorderen Querwand 52 und der Zwischenwand 58 begrenzt ist. Um das Verschieben des Dosiereinschubs 34 in der Aufnahme 32 zu erleichtern, ist am oberen Rand der vorderen Querwand 52 des Dosiereinschubs 34 eine nach aussen abragende Griffleiste 62 vorgesehen.

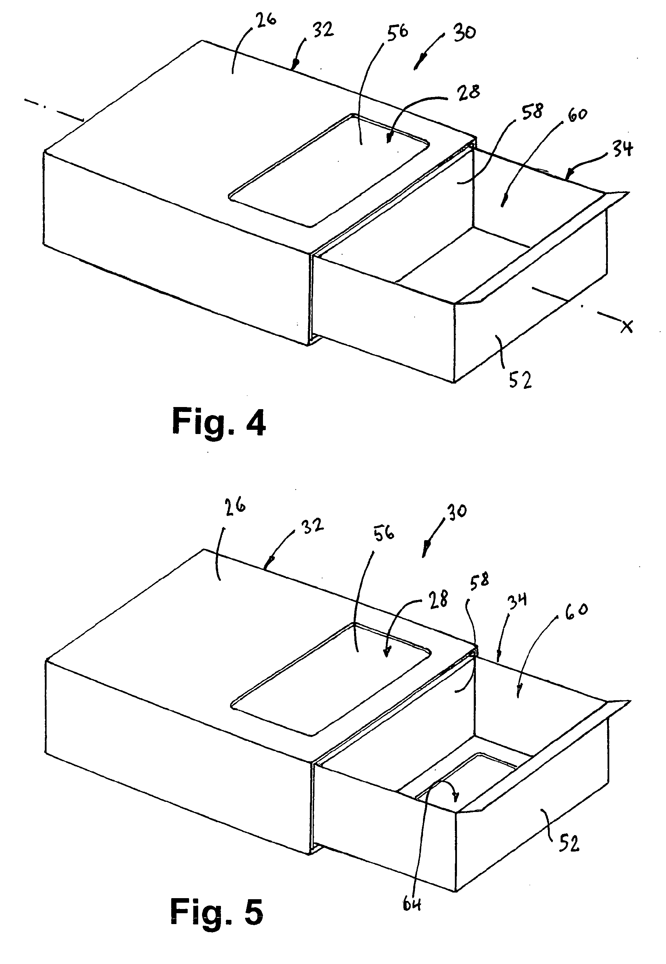

Wie aus Fig. 4 ohne weiteres erkennbar ist, liegt der Rand der Dosieröffnung 28 bei vollständig in die Aufnahme 30 eingeschobenem Dosiereinschub 34 innerhalb des Öffnungsrandes des Füllraumes 60. Wird der Dosiereinschub 34 so weit aus der Aufnahme 32 herausgezogen, dass sich der Füllraum 60 ausserhalb der Aufnahme 32 befindet, so wird die Dosieröffnung 28 in der Aufnahme 32 von der Deckplatte 56 des Dosiereinschubs 34 vollständig abgedeckt.

Die Funktionsweise des Dosiersystems 30 wird nachfolgend für ein rieselfähiges Füllgut 65 anhand der Figur 1 bis 4 und 6 erläutert.

Bei vollständig in die Aufnahme 32 eingeschobenem Dosiereinschub 34 rieselt das im Beutel 12 enthaltene Füllgut 65 durch die Dosieröffnung 28 direkt in den Füllraum 60 des Dosiereinschubs 34. Anschliessend wird der Dosiereinschub 34 so weit aus der Aufnahme 32 herausgezogen, bis sich der Füllraum 60 ausserhalb der Aufnahme 32 befindet und die Deckplatte 56 die Dosieröffnung 28 in der Bodenplatte 26 verschliesst. In dieser Stellung des Dosiereinschubs 34 kann das Füllgut durch Kippen der Verpackungseinheit 10 dem Dosiereinschub 34 entnommen werden. Nach der Entnahme des Füllgutes 65 wird der Dosiereinschub 34 in der Aufnahme 32 wieder bis zum Anschlag mit der hinteren Querwand 42 eingeschoben. Bei diesem Zurückschieben des Dosiereinschubs 34 gibt die Deckplatte 56 die zuvor verschlossene Dosieröffnung wieder frei, wodurch erneut eine Portion Füllgut 65 aus dem Beutel 12 in den Füllraum 60 des Dosiereinschubs 34 rieselt. Dieser Vorgang wird entsprechend der gewünschten Anzahl der der Verpackung zu entnehmenden Füllgutportionen wiederholt.

Eine andere Möglichkeit zur Entnahme des portionierten Füllgutes 65 aus dem Füllraum 60 des Dosiereinschubs 34 ergibt sich mit einer in Fig. 5 gezeigten speziellen Ausgestaltung des Füllraumes 60 mit einer Auslauföffnung 64 in der Bodenplatte 46 des Dosiereinschubs 34. Bei vollständig in die Aufnahme 32 eingeschobenem Dosiereinschub 34 ist die Auslauföffnung 64 durch die Bodenplatte 36 der Aufnahme 32 verschlossen. Beim Herausziehen des Dosiereinschubs 34 fällt bei dieser Ausführungsform die im Füllraum 60 vorhandene Füllgutportion durch die Auslauföffnung 64 beispielsweise direkt in ein zur Aufnahme des Füllgutes bereit gestelltes Gefäss. Bei dieser Ausführungsform muss darauf geachtet werden, dass Grösse und gegenseitige Lage der Dosieröffnung 28 und der Auslauföffnung 64 so gewählt werden, dass die Dosieröffnung 28 von der Deckplatte 56 verschlossen wird, bevor sich Auslauföffnung 64 beim Herausziehen des Dosiereinschubs 34 aus der Aufnahme 32 öffnet.

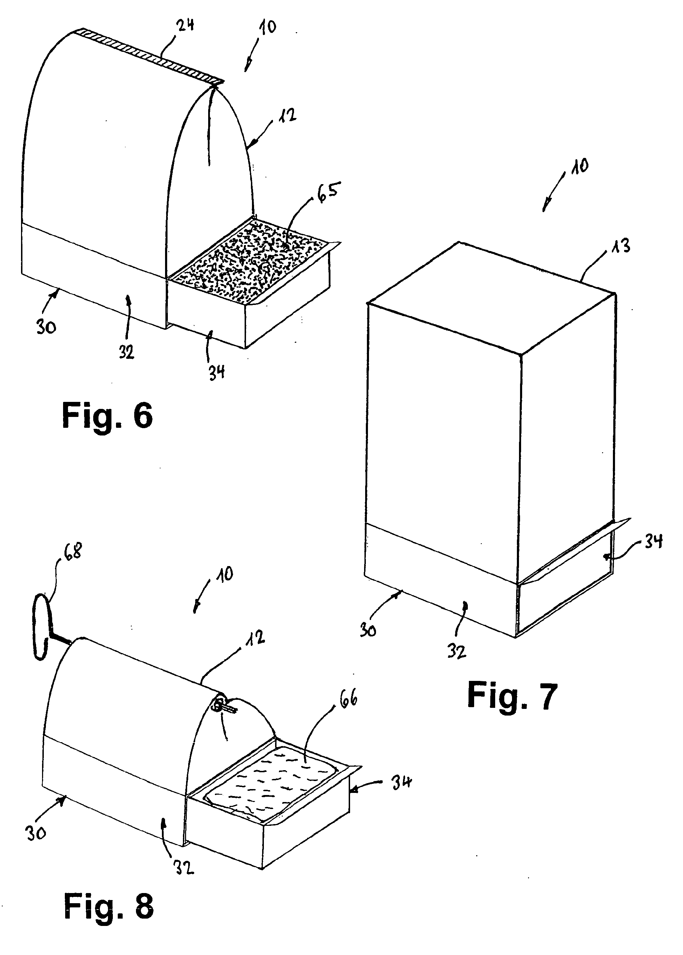

Eine mit einem rieselfähigen Füllgut 65 wie beispielsweise Reis oder Mais gefüllte Verpackungseinheit 10 mit einer flexiblen Beutelverpackung 12 aus beispielsweise Kunststoff und einer in Fig. 4 gezeigten Dosiereinheit 30 ist in Figur 6 bei teilweise aus der Aufnahme 32 herausgezogenem Dosiereinschub 34 dargestellt. Die im Füllraum 60 bereitgestellte Portion Füllgut 65 kann durch Kippen der Verpackungseinheit 10 entnommen werden.

Fig. 7 zeigt eine Verpackungseinheit 10 mit einer quaderförmigen Schachtelverpackung 13 aus beispielsweise Karton anstelle einer flexiblen Beutelverpackung 10 aus Kunststoff.

In Fig. 8 ist eine für teilfestes/teilflüssiges Füllgut 66 geeignete Verpackungseinheit 10 mit einer flexiblen Beutelverpackung 12 aus beispielsweise Kunststoff dargestellt. Das Füllgut 66 muss in diesem Fall durch Verkleinerung des Beutelvolumens aus dem Beutel 12 in den Füllraum 60 des Dosiereinschubs 34 gedrückt werden. Dies kann beispielsweise durch Aufwickeln des Beutels 12 vom Siegelrand 24 her mit einer entsprechend ausgestalteten Aufwickeleinrichtung 68 erfolgen. Beim Herausziehen des Dosiereinschubs 34 aus der Aufnahme 32 wird das Füllgut 66 durch die obere Kante der Zwischenwand 58 direkt unterhalb der Dosieröffnung 28 abgeschert. Die Portion Füllgut 66 kann dem Füllraum 60 beispielsweise mit einem Löffel entnommen werden.

Aus der Darstellung des geöffneten Dosiersystems 30 in Fig. 6 ist ohne weiteres erkennbar, dass der Füllraum bei entsprechender Gestaltung des Dosiereinschubs 34 als Menüschale beziehungsweise Futternapf für Tiere wie beispielsweise Hunde oder Katzen dienen kann. Die in der Zeichnung dargestellten Verpackungseinheiten 10 mit integriertem Dosiersystem 30 sind deshalb neben ihrer Eignung zur Lagerung und portionenweisen Entnahme rieselfähiger oder teilflüssiger / teilfester Füllgüter wie pulverförmiger oder körniger Nahrungsmittel oder Waschpulver insbesondere auch für trockenes und auch teilfestes / teilflüssiges Tierfutter geeignet.

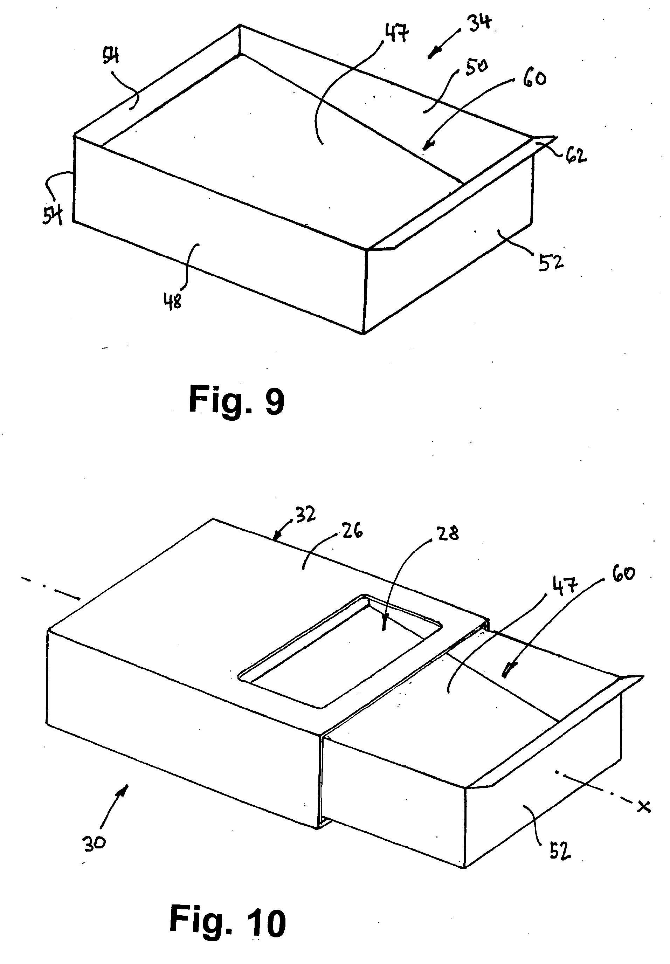

Ein in den Fig. 8 und 9 gezeigtes Dosiersystem 30 dient der kontinuierlichen Entnahme von Füllgut. Anstelle der Verschlussplatte 56 und der Zwischenwand 58 ist eine von der hinteren Querwand 54 in einem spitzen Winkel α zur Einschubrichtung x geneigte und zur vorderen Querwand 52 hin abfallende Platte 47 angeordnet. Die geneigte Platte 47 bewirkt, dass bei herausgezogenem Dosiereinschub 34 bei Entnahme von Füllgut aus dem Füllraum 60 Füllgut durch die immer offen stehende Dosieröffnung 28 automatisch in den Füllraum nachfliesst. Auf diese Weise wird der Füllraum 60 immer wieder selbsttätig nachgefüllt. Dieses Dosiersystem eignet sich daher auch als Serviereinrichtung zur Bereitstellung von Erdnüssen und dergleichen Esswaren in rundlicher Form.

## Patentansprüche

1. Verpackungseinheit mit einem Behälter (12, 13) zur Lagerung von Füllgut und einem Dosiersystem (30) zur Entnahme von Füllgut aus dem Behälter (12, 13),
**dadurch gekennzeichnet, dass**
das Dosiersystem (30) eine mit einem Behälterboden (26) mit Dosieröffnung (28) verbundene Aufnahme (32) und einen in der Aufnahme (32) in einer Einschubrichtung (x) verschiebbar gelagerten Dosiereinschub (34) aufweist, wobei der Dosiereinschub (34) einen Füllraum (60) zur Zwischenspeicherung von dem Behälter (12, 13) zu entnehmendem Füllgut aufweist, wobei in einer ersten, geschlossenen Position des Dosiersystems (30) der Füllraum (60) unter der Dosieröffnung (28) angeordnet ist und in einer zweiten, offenen Position des Dosiersystems (30) der Füllraum (60) ausserhalb der Aufnahme (32) frei zugänglich ist.

2. Verpackungseinheit nach Anspruch 1, **dadurch gekennzeichnet, dass** Dosiereinschub (34) zur portionenweisen Entnahme von Füllgut eine in Einschubrichtung (x) an den Füllraum (60) angrenzende Verschlussplatte (56) aufweist und die Dosieröffnung (28) in der zweiten, offenen Position des Dosiersystems (30) von der Verschlussplatte (56) abgedeckt ist.

3. Verpackungseinheit nach Anspruch 2, **dadurch gekennzeichnet, dass** der Füllraum (60) eine Auslauföffnung (64) aufweist.

4. Verpackungseinheit nach Anspruch 1, **dadurch gekennzeichnet, dass** der Füllraum (60) eine in einem spitzen Winkel (α) zur Einschubrichtung (x) geneigte Platte (47) zum automatischen Nachfliessen von Füllgut in der zweiten, offenen Position des Dosiersystems (30) bei Entnahme von Füllgut aus dem Füllraum (60) aufweist.

5. Verpackungseinheit nach einem der Ansprüche 1 bis 4, **dadurch gekennzeichnet, dass** die Aufnahme (32) rohrförmig mit einem rechteckförmigen Querschnitt ausgebildet ist.

6. Verpackungseinheit nach einem der Ansprüche 1 bis 5, **dadurch gekennzeichnet, dass** der Behälterboden (26) ein Teil der Aufnahme (32) ist.

7. Verpackungseinheit nach einem der Ansprüche 1 bis 6, **dadurch gekennzeichnet, dass** der Behälter (12, 13) mit dem Behälterboden (26) verklebt ist.

8. Verpackungseinheit nach einem der Ansprüche 1 bis 7, **dadurch gekennzeichnet, dass** der Behälter eine Beutelverpackung (12) oder eine Schachtelverpackung (13) ist.

9. Verwendung einer Verpackungseinheit (10) nach einem der vorangehenden Ansprüche zur Lagerung von pulverförmigen, körnigen oder stückigen Füllmitteln.

10. Verwendung einer Verpackungseinheit (10) nach einem der vorangehenden Ansprüche zur Lagerung von Trockenfutter für Tiere.

11. Verwendung nach Anspruch 10 oder 11 mit einem Füllraum (60) als Servierschale oder Futternapf.
